# EUROPEAN PATENT SPECIFICATION

(11) **EP 0 388 052 B1**
(45) Date of publication and mention of the grant of the patent: **23.04.1997**
(21) Application number: 90302255.6
(22) Date of filing: 23.02.1990
(51) Int. Cl.: G06F 15/16, G06F 9/46

(54) **Multiprocessor system synchronisation**
Synchronisierung für Multiprozessorsystem
Synchronisation de système multiprocesseur

(30) Priority: 13.03.1989 JP 57762/89
(43) Date of publication of application: 19.09.1990
(73) Proprietor: International Business Machines Corporation, Armonk, N.Y. 10504 (US)
(72) Inventor: Fukuda, Munehiro, Sagamihara-shi, Kanagawa-ken (JP); Matsumoto, Takashi, Coop Sunshaine 203goh, Tokyo-to (JP); Nakada, Takeo, Kawaguchi-shi, Saitama-ken (JP)
(74) Representative: Burt, Roger James, Dr.

(56) References cited:
- EP-A- 0 071 727
- DE-A- 3 638 947
- US-A- 4 945 486
- MICROPROCESSING AND MICROPROGRAMMING. vol. 19, no. 3, June 1987, AMSTERDAM NL D. GHOSAL: 'SHAMP: An experimental shared memory multiprocessor system for performance evaluation of parallel algorithms'
- OPERATING SYSTEM REVIEW (SIGOPS). VOL. 19, NO. 2, APRIL 1085, NEW YORK US PAGES 19-22; P. JANSON: 'OPERATING SYSTEM SUPPORT FOR COMMUNICATION'

## Description

The present invention relates to multiprocessor system synchronisation, providing synchronisation needed frequently among processes each dispatched to processors, at a high speed and with high flexibility using hardware.

In parallel processing, it is a key factor accurately to perform data transfer among divided processes and to maintain the execution sequence of the processes. In order to determine appropriate timing for such data transfer or the like, synchronisation needs to be achieved among the processes.

Such synchronisation is usually performed through a memory. A variable is placed in the memory, for acknowledging the establishment of synchronisation, and processes to be synchronised with one another lock the bus and read/write the variable in order to ascertain that synchronisation has been achieved. The reason why the bus is locked is because the consistency of the variable may be destroyed if one process is allowed to read and write the variable while another process reads or writes it. The realisation of synchronisation by reading/writing a variable in the memory is effective if the number of processes to be synchronised is small and if the frequency of synchronisation is small.

If the number of processes to be synchronised is large and the synchronisation is frequently performed, realisation of synchronisation through a memory cannot be efficient.

Only one processor can seize the bus to make reference to the memory at a time, so that, the synchronisation through the memory causes serialisation of processes. In addition, the more frequently the bus is locked, the more the other processing is affected, which results a worsening of performance of the multiprocessor system as a whole. Further, when an instruction sequence which lies between consecutive synchronisation operations only includes a few steps, the ratio of overhead caused by execution of the instructions required to provide the above synchronisation to total overhead increases.

Accordingly, in an application where parallelism is much exploited and frequent synchronisation is needed, synchronisation among processes assigned to processors needs to be performed at a high speed by a technique that does not use a memory and a shared common bus. Several techniques have been proposed in the past.

For example, one technique for lessening the frequency of access to a shared bus and a shared memory involves adding special registers for synchronisation and communication between processors, these being separate from the shared memory. In this technique, the processors determine whether they should execute the processes or stay in a busy-waiting state - repetitively reading the contents of the registers - so that synchronisation among the processors is attained. See "Stellix: UNIX for a Graphics Supercomputer", Proceedings of the Summer 1988 USENIX Conference, June 20 - 24, 1988, San Francisco California USA, USENIX Association, pp. 321 - 330 Thomas J. Teixeira and Robert F. Gurwitz.

Another approach, provides a register for synchronisation added to each register, and these additional registers are interconnected through a bus used exclusively for synchronisation. Each processor can determine the values in the registers exclusive for synchronisation for other processors by snooping this exclusive synchronisation bus. In this approach, each processor also determines whether it should execute the process or stay in a busy-waiting state - repetitively reading the contents of the registers - so that synchronisation among the processors is attained. Each processor snoops and then updates its contents and in this way the frequency of access to the exclusive synchronisation bus is decreased. However, the contents of the registers can not be changed at a high speed because of contention among signals on the synchronisation bus. See "VLSI Assist for a Multiprocessor", Proceedings of the Second International Conference on Architectural Support for Programming Languages and Operation Systems, October 1987, pp. 10 - 20, Bob Beck, Bob Kasten and Shreekant Thakkar, 1987 ACM, pp. 10 - 20.

Those methods are partially effective in that they can reduce the frequency of use the shared bus and the shared memory, and, in some cases can provide excellent system performance. However, they do not solve the problem of process serialisation that leads to increase in the synchronisation overhead because all processors must be periodically in their busy-waiting state in order for synchronisation to be attained and be forced to access the exclusive synchronisation bus while avoiding contention for this bus.

The invention hereby proposed is different from the above-mentioned prior art in that the group of processors to be synchronised is specified by registers, and that no contention occurs on a bus for synchronisation.

European Patent Application EP-A-0 131 658 discloses a synchronisation controller provided for each processor, and synchronisation control lines which are employed for communicating synchronisation signals as set out in the preamble of claim 1.

Japanese Published Unexamined patent Application No. 59-24364 discloses a data flow type processing system in which token lines for receiving tokens (process termination signals) from each processor and firing signal lines for receiving firing signals to the processors are arranged in a matrix, and the intersection connecting states are set by flip-flops to permit dynamic change of intertask connections.

However, those application do not disclose the feature that each processor is provided with a synchronisation controller, which is in turn provided with a synchronisation register to easily perform grouping of processors to be synchronised and to change the group.

According to one aspect of the present invention, there is provided a multiprocessor system including a plurality of processors connected through a shared data bus and arranged to perform operations in synchronism; a synchronisation controller for each of the processors; and a synchronisation signal bus to which the synchronisation controllers are commonly connected; each synchronisation controller having output means for outputting synchronisation status signals to the synchronisation signal bus in response to a synchronisation request signal; monitoring means for monitoring the synchronisation signal bus to detect a predefined synchronisation condition thereof; and signalling means responsive to such detection to signal the occurrence of said synchronisation condition to the association processor; and characterised as set out in the characterising portion of claim 1.

Such an arrangement is proposed as a consequence of the above consideration, and is considered to provide a synchronisation controller for a multiprocessor system that can attain frequent synchronisation among the processes assigned to each processor at a high speed, and can flexibly establish grouping of the processors so that a plurality of programs for parallel processing can be concurrently executed.

As disclosed hereinafter, a synchronisation controller is provided for each processor, and these synchronisation controllers are commonly connected to a synchronisation signal bus. Each of the synchronisation controllers has
(a) a synchronisation wait signal transmitting means for receiving a synchronisation request signal from a corresponding processor and transmitting a synchronisation wait signal to the synchronisation signal bus,
(b) a synchronisation register for specifying the other processors to be synchronised with the corresponding processor,
(c) a comparator means for comparing the signal from the synchronisation signal bus with the content of the synchronisation resister, and
(d) a means for transmitting to the corresponding processor a synchronisation-acknowledge signal based on the result of comparison by this comparator means.

This use of a synchronisation controller for each processor and a synchronisation signal bus produces high efficiency of the synchronisation among processes in a multiprocessor system.

When there is a need for a plurality of processors each to have synchronisation with all the other processors of the plurality, they each suspend execution and maintain a busy-wait state until all of them have generated their own synchronisation requests. The synchronisation controller provided for each processor can immediately recognise the establishment of synchronisation by detecting the synchronisation request signals supplied from other processors on the synchronisation signal bus. In addition, the processors to be synchronised can be flexibly grouped. Each processor specifies to its synchronisation controller a group of processors to be synchronised with the processor concerned, and all processors in this group remain in a busy-waiting state.

The present invention will be described further by way of example with reference to embodiments thereof as illustrated in the accompanying drawings, in which:
Fig. 1 is a block diagram of one embodiment of the invention;
Fig. 2 is a diagram for illustrating instructions used by the embodiment of Fig. 1;
Fig. 3 is a block diagram showing the configuration of the synchronisation controller S of the embodiment of Fig. 1;
Fig. 4 is a timing chart for illustrating the operation of the synchronisation controller S of Fig. 3;
Fig. 5 is a diagram showing the grouping of processors by an operating system;
Fig.6 is a diagram showing the state of the synchronisation register 3 at the time of the grouping of Fig. 5;
Fig. 7 is a diagram showing dummy synchronisation instructions and change of the group of processors;
Fig. 8 is a block diagram showing a modification of the synchronisation controller S designed to efficiently process the dummy synchronisation instruction;
Fig. 9 is a block diagram showing another embodiment of the invention, which implements the synchronisation control in a hierarchy;
Fig. 10 is a diagram further illustrating the embodiment of Fig. 9;
Fig. 11 is a block diagram showing a further embodiment, in which the number of synchronisation signal lines is reduced by assigning each synchronisation signal line to each processor group;
Fig. 12 is a diagram showing the pipeline processing;
Figs. 13 and 14 are diagrams showing still another embodiment, in which the overhead is kept small by reducing the frequency of synchronisation; and
Figs. 15, 16 and 17 are diagrams showing examples of applications.

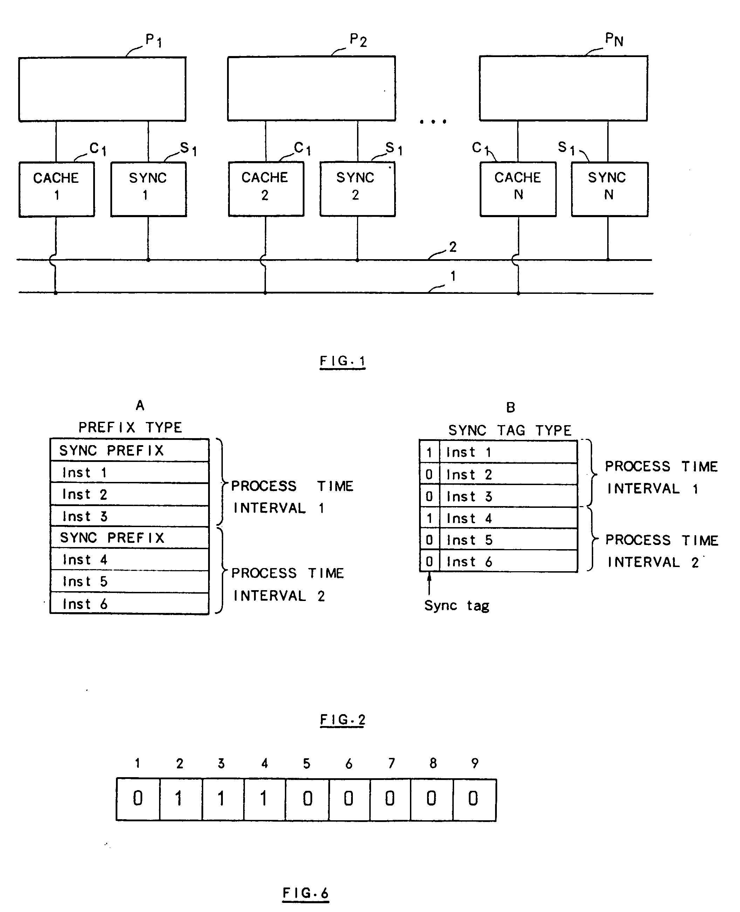

Fig. 1 shows an overall diagram of one embodiment of the invention where the environmental system is a tightly coupled multiprocessor system using a shared bus and shared memory configuration.

Referring to Fig. 1, a plurality of processors P₁, P₂ ... Pₙ are connected in parallel to a system bus 1 through respective caches C₁, C₂ ... Cₙ. The processors P₁, P₂ ... Pₙ are provided with synchronisation controllers, S₁, S₂ ... Sₙ which are connected in parallel to a synchronisation signal bus 2. The synchronisation signal bus 2 consists of synchronisation signal lines, the number of which is equal to the number of processors. The synchronisation controllers S₁, S₂ ... Sₙ are connected, on the one hand, to the processors P₁, P₂ ... Pₙ, to accept the synchronisation request signals from the processors P₁, P₂ ... Pₙ, and to receive group data from the processors to be synchronised. Further, the synchronisation controllers S₁, S₂ ... Sₙ are connected, on the other hand, to a synchronisation signal bus 2 so that these controllers detect that all the processors in the group have completed the busy-waiting for synchronisation by snooping the bus 2 and notify this to their corresponding processors.

Into each series of associated processes which are assigned to the processors and thus need to be synchronised, synchronisation instructions are inserted, as required. It is intended to achieve efficient data transfer among the processes assigned to each processor as well as the maintenance of the execution sequence, by causing the processors simultaneously to enter a busy-wait state every time a process interval, demarked by the synchronisation signals, is executed. The synchronisation of every execution of each process interval is attained at a high speed by the synchronisation controllers. The detail is explained in the following.

Either a synchronisation prefix instruction is entered periodically into the instruction stream or, alternatively, a synchronisation tag is added to selected instructions (Fig. 2). As the execution by a processor reaches a prefix or a tagged instruction, it stops executing the instruction stream and broadcasts a synchronisation signal requesting synchronisation just before executing the instruction. If and when it receives a Sync-Ack signal from an external source, the processor resumes execution from that instruction. When employing existing processors, I/O instructions such as Out and Wait instructions may be used as the instruction for synchronisation, with Wait-Ack signal used as a Sync-Ack signal, thereby realising the execution of the process interval divided by the synchronisation instructions, and the synchronisation of the processors.

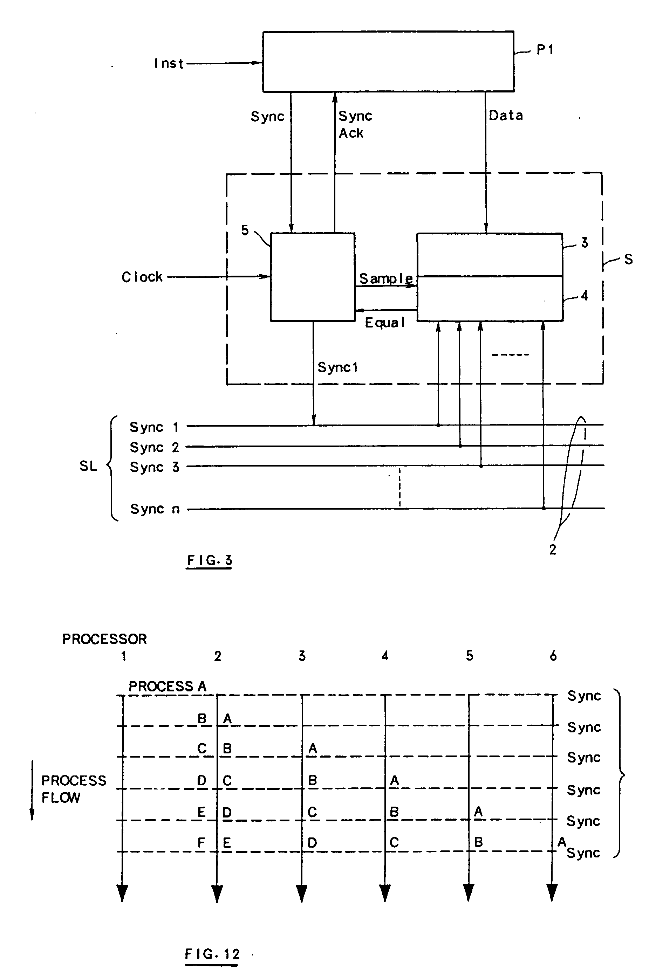

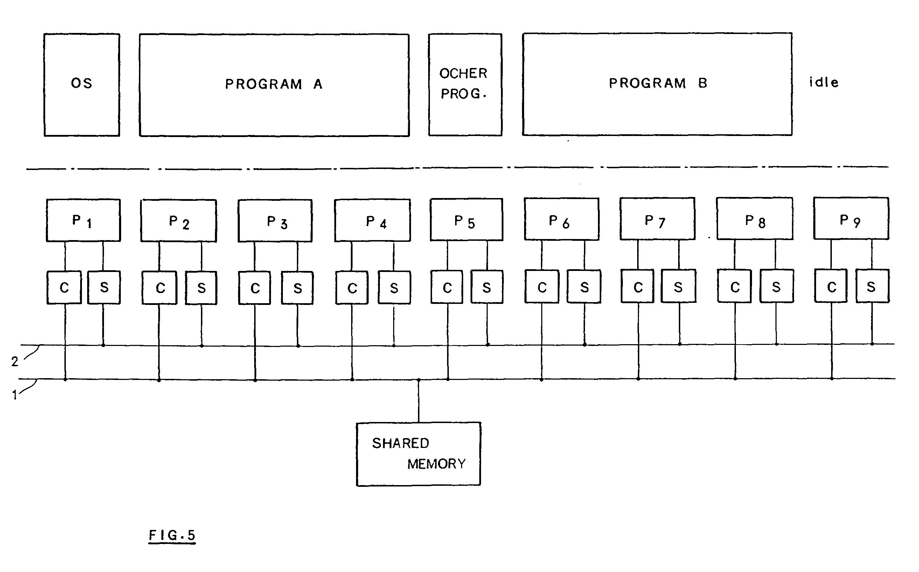

The synchronisation controller S comprises, as shown in Fig. 3, a synchronisation register 3, a comparator 4 and a timing control circuit 5. It should be noted that to refer to any arbitrary synchronisation controller, the suffixes are omitted. The same applies to other reference numerals. It is assumed that all synchronisation controllers S₁, S₂ ... Sₙ in the system are driven by the same clock. Each of synchronisation signal lines SL₁, SL₂ ... SLₙ on the synchronisation signal bus ₂ is assigned to a particular one of the processors P₁, P₂ ... Pₙ to transmit synchronisation signals from the processors P₁, P₂ ... Pₙ but all are monitored by each of the controllers. The synchronisation register 3 has a bit length corresponding to the number of processors. The bit corresponding to each processor P to be synchronised is set to the binary value "1". The comparator 4 samples the data on the synchronisation signal bus 2 every one clock or one-half clock, and compares it with the data in the synchronisation register 3. The timing control circuit 5 conducts reception of the Sync signal and return of the Sync-Ack signal according to the clock. In the following, the operation procedure is explained (Fig. 4):
(a) The processor P outputs a Sync signal just before execution of an instruction requiring synchronisation, and suspends the execution until the Sync-Ack signal is inputted.
(b) The synchronisation controller S, upon receiving the Sync signal, outputs it to the signal line SL of the synchronisation signal bus 2 assigned thereto at the leading edge of the next clock.
(c) The synchronisation controller S continues to snoop the synchronisation signal bus 2 until all signal lines SL of the synchronisation signal bus 2 corresponding to the bits of its synchronisation register 3, to which 1 is set, become active.
(d) As the above-mentioned conditions are met, it ends the outputting of the Sync signal to the synchronisation signal bus at the leading edge of the next clock, and returns a Sync-Ack signal to the processor P.
(e) The processor P, upon receipt of the Sync-Ack signal, stops transmitting the Sync signal, and resumes the execution of the instruction.
(f) The synchronisation controller S, in response to this action, stops generating the Sync-Ack signal.

If it cannot be guaranteed that access to the system bus 1 by the cache C has completed at the stage of (b), the output of the Sync signal to the synchronisation signal bus 2 needs to withheld until this access completes.

### (3) Grouping of processors

In a multi-user environment, it is not easy to assign all processors P in the system to the execution of an application which can perform parallel processing. For effective use of a processor resource, it is necessary to group processors so as to limit synchronisation to the processors in the same group. Accordingly, the synchronisation controller S sets only those bits of the synchronisation register 3 corresponding to the processors in the group. Normally, the operating system does this setting.

Fig. 5 shows how user programs A and B, which require the use of a plurality of processors P₁, P₂ ..., execute concurrently under the control of an operating system OS. An example of the operation of the operating system OS and an example of synchronisation control by the grouping of processors P are explained in the following:

Referring to Fig. 5, one of the processors P₁ of the multiprocessor system is assigned to its operating system OS. All the remaining processors P₂ ... Pₙ are assigned to the execution of user programs. The operating system OS detects idle processors P₂, P₃ and P₄, and assigns to them an executable program A. At this time, bits of the synchronisation registers 3 of the synchronisation controllers S₂, S₃ and S₄ corresponding to the assigned processors P₂, P₃ and P₄ are set, as shown in Fig. 6. In this way, synchronisation within the group of processors assigned to the program A can be attained. In a similar way, the synchronisation within the processor group assigned to the program B can be simultaneously attained.

Now, addition of a "dummy" synchronisation request is described:

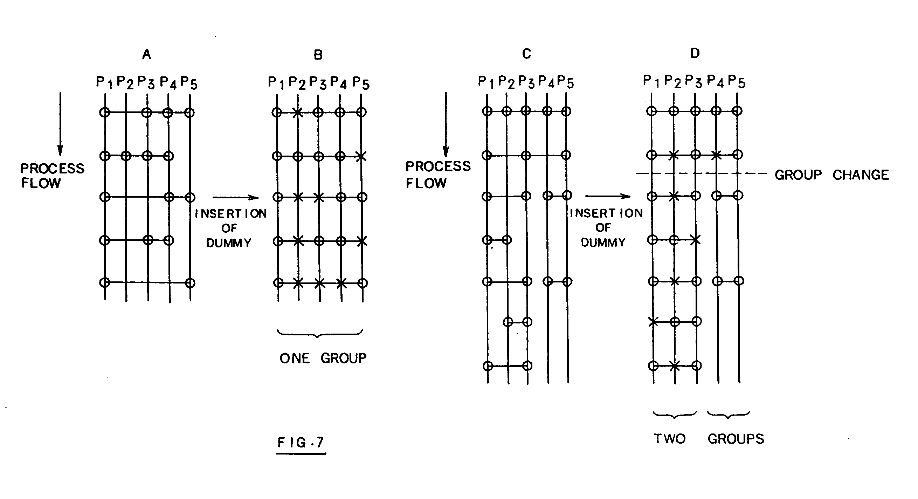

Within any group, all processors P belonging to the group are synchronised by each synchronisation operation. Sometimes, some of the processors need not to be synchronised. On such an occasion, a dummy synchronisation request signal is added to a series of instructions assigned to the processors P that need not be synchronised. Figs. 7A and B show a dummy request. Fig. 7A shows a flow of actual processes, with circles indicating processes to be synchronised. In this example, since processors P₁, P₂ ... P₅ are assumed to be in a group, even if only one of them does not issue a synchronisation request, or does not produce a circle, the entire processing continues to be suspended. For this reason, as shown by cross marks in Fig. 7, dummy request signals are appropriately inserted. The dummy synchronisation request signals do not badly affect the processing performance and yet avoid system suspension.

If some of the processors need not to be synchronised with other processors of the group for a long period of time, the grouping of the processors is dynamically changed, as shown in Figs. 7C and D, by rewriting the synchronisation registers 3. In Fig. 7D, two groupings are illustrated, divided into the two groups at the position indicated by a broken line.

In this example, the program needs to be examined in advance, and the number of dummy request(s) and their insertion positions determined following the logic of the program to be executed.

In the above-mentioned procedure, issuance of the dummy synchronisation requests causes processors, which need not to be synchronised, to adopt the busy-wait state. By the method described in the following, processors, which need not to be synchronised, may proceed with their execution up to a point where the synchronisation is essential.

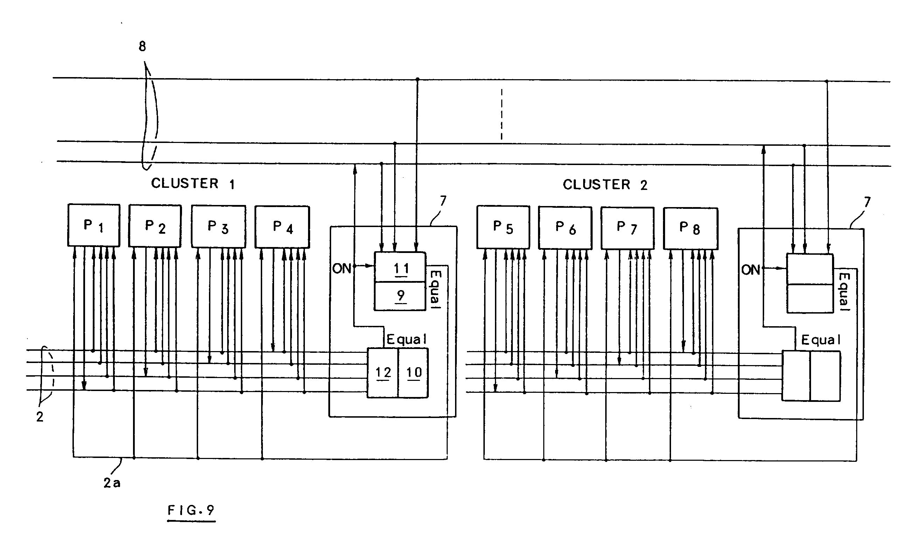

As shown in Fig. 8, information for notifying the synchronisation controller S that the synchronisation is a dummy is added to a synchronisation instruction, a prefix instruction or a synchronisation tag. When a processor issues a dummy synchronisation instruction, it proceeds with its execution without waiting for responses from the other processors. The synchronisation controller S needs to retain the number of dummy synchronisation instructions that are not yet processed. Therefore, as shown in Fig. 8, a dummy request counter 6 is added to the synchronisation controller S. When the processor P issues a dummy synchronisation instruction, the synchronisation controller S increments the dummy request counter 6. As one dummy synchronisation processing is completed, the synchronisation controller S decrements the dummy request counter 6. When the processor P issues a normal synchronisation instruction and waits for responses from the other processors, the synchronisation controller S processes dummy synchronisation until the value of the dummy request counter 6 becomes 0, and, subsequently, processes the normal synchronisation instruction. At this time, the processor suspends the execution until an Ack signal is outputted from the synchronisation controller S.

Components in Fig. 8 corresponding to these of Fig. 3 are identified by similar references, for which detailed description is omitted.

### (4) Hierarchial synchronisation control

It is desirable for good performance that the number of synchronisation signal lines corresponds to that of the processors. However, it does cause an increase in the amount of hardware required, and is difficult to implement if the system includes a large number of processors. Thus, as shown in Fig. 9, it may be possible to control the synchronisation in a hierarchical manner and so reduce the number of synchronisation signal lines.

Referring to Fig. 9, although the general cluster CL can be formed with several processors, possibly up to ten, the two clusters in the figure, CL₁ and CL₂, are each presented as having four processors. The clustering is physical, rather than logical, as shown, depending on connections to conductors, and is relatively independent of the logical grouping of the processors P.

The processors in either cluster CL are coupled their own synchronisation signal bus 2 that consists of synchronisation signal lines of the number larger by one than the number of processors, with the number of processors thus fixed once the selection of how many lines has been made. Within the cluster CL, the synchronisation based on the logical grouping of processors P may be attained without restriction.

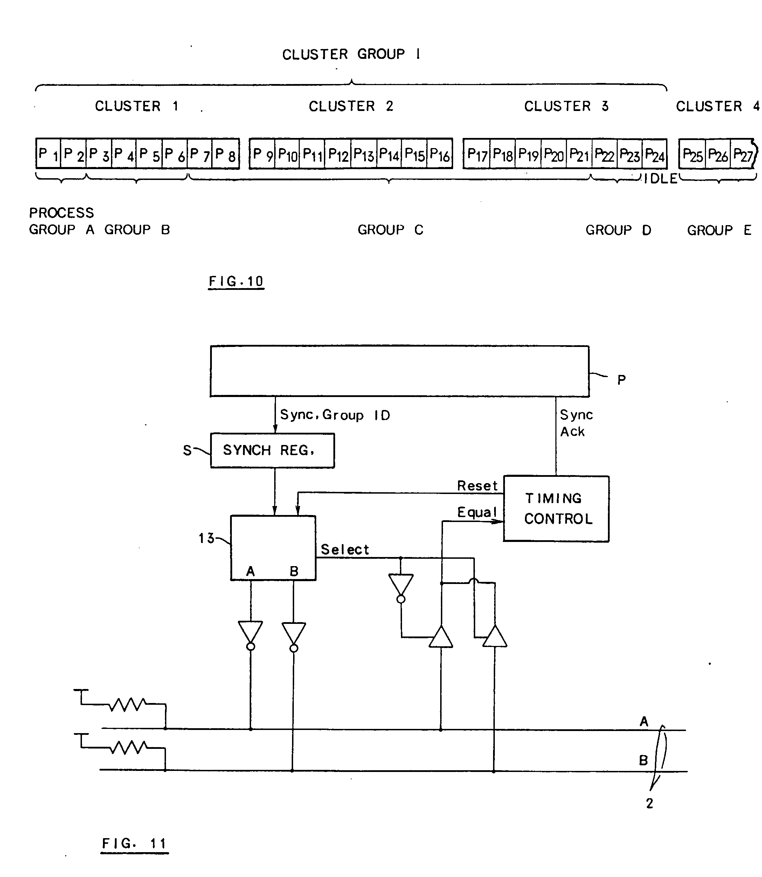

Each cluster is equipped with a cluster-to-cluster synchronisation controller 7. The cluster-to-cluster synchronisation controller 7 attains synchronisation between clusters through a cluster-to-cluster synchronisation signal bus 8 consisting of signal lines, the number of which is equal to the number of clusters for a two level hierarchy. However, in a similar manner, the clusters CL can be grouped, adding another line to bus 8. One cluster CL can not belong to two or more cluster groups in an overlapping manner because it is not possible to distinguish for which group the synchronisation is to be attained. Further, grouping of processors P across the clusters CL may be performed under the following limitations. That is, only one logical grouping of processors across the clusters is permissible on one cluster group because, also in this case, it is not possible to determine to which group the synchronisation is to be attained. Fig. 10 shows synchronisations based on groupings of processors within single clusters and those across the clusters.

The cluster-to-cluster synchronisation controller 7 has an internal cluster group synchronisation register 9 and an internal processor group synchronisation register 10 and a pair of comparators 11 and 12, one for each of these synchronisation registers 9 and 10. The cluster group synchronisation register 9 specifies cluster groups to be synchronised. The processor group synchronisation register 10 specifies the processor group which participates in synchronisation across the clusters.

In the following, a detailed explanation will be given on how to attain the synchronisation of the processors using the cluster-to-cluster synchronisation controller 7.
(a) The cluster group and the processor group to be synchronised are specified to the cluster group synchronisation register 9 and the processor group synchronisation register 10 in the cluster-to-cluster synchronisation controller 7, respectively.
(b) The cluster-to-cluster synchronisation controller 7 snoops the synchronisation signal bus 2 until all processors specified by the processor group synchronisation register 10 output Sync signals.
(c) When all the synchronisation signal lines assigned to the specified processors P become active, the cluster-to-cluster synchronisation controller 7 activates the signal lines of the cluster-to-cluster synchronisation signal bus 8 assigned thereto.
(d) The cluster-to-cluster synchronisation controller 7 snoops the cluster-to-cluster synchronisation signal bus 8 until all the clusters specified by the cluster group synchronisation register 9 output Sync signals.
(e) When all the specified clusters feed Sync signals have produced signals on the cluster-to-cluster synchronisation signal bus 8, each cluster-to-cluster synchronisation controller 7 notifies the establishment of cluster-to-cluster synchronisation to the processors specified to the processor group register 10 by using one of synchronisation signal buses 2 in each cluster CL (cluster-to-cluster synchronisation notifying signal line 2 ack).

As an example of implementation of the hierarchical synchronisation mechanism of a large multi-processor system, a following configuration may be contemplated. That is, a large multi-processor system may be configured by mounting several processors on a card, and connecting several cards into a box. In that way, it is easy to arrange the processors on a card as one cluster.

In the hierarchical synchronisation mechanism, expansion to multi-stages may be achieved by providing a cluster-to-cluster synchronisation signal bus 8 having signal lines the number of which is larger by one than the number of clusters, as already indicated, in a manner similar to that of the synchronisation signal bus 2 in a cluster.

### (5) Reduction of the number of synchronisation signal lines

Aside from the indicated hierarchical arrangement of synchronisation control, it is sometimes possible to reduce the number of the synchronisation signal lines by the following method.

Briefly, a single synchronisation signal line is assigned to each processor group, and each processor is connected to each synchronisation signal line through each of switches. It sets only the switch which is connected to the synchronisation signal line corresponding to the group to which it itself belongs. The configuration will be described in detail later with reference to Fig. 11.

In this way, the number of signal lines of a synchronisation signal bus may be reduced by a half. For example, if the number of processors is ten, the number of signal lines of the synchronisation signal bus can be reduced to five. This is obvious from the following. The maximum number of groups should be the number of processors divided by the minimum number of processors that can constitute a group. Because one processor does not constitute a group, the minimum number of processors is two. Accordingly, the number of signal lines is one-half the number of processors, as above-described.

Fig. 11 shows a configuration of the synchronisation controller S and the synchronisation signal bus 2 in a case where the number of processors is four and the number of synchronisation signal lines is two.

To the synchronisation signal line SL assigned to each of the processor groups, a synchronisation request line from a synchronisation controller S is wired dot-OR, where the operation is on negative logic. The synchronisation controllers S for all processors P in a group previously feed low level signals to a signal line SL assigned to that group. When a synchronisation request is issued from any processor P, its synchronisation controller S stops feeding the low level signal.

If all is well, all the processors P in the group issue the synchronisation level change, the level of the signal line SL turns high so that the completion of the synchronisation between all the processors can be detected.

Referring to Fig. 11, the synchronisation controller S consists of a synchronisation register, a timing control circuit, as before, and a switch 13. The synchronisation register specifies whether to issue the synchronisation or not and which processor group is to be synchronised. The switch 13 feeds a Sync signal in advance to one of the synchronisation signal lines A or B which are assigned to the processor groups as specified by the synchronisation register. When the processors issue a synchronisation request, the signal is turned off. The timing control circuit snoops the signal lines assigned to the group. When the signal line attains its high level, the timing control circuit outputs an Ack signal to the processors, thereby notifying them of completion of synchronisation. Furthermore, the timing control circuit enables the next synchronisation request from the processors by causing the switch 13 to resume the feeding of the Sync signal after a predetermined period of time.

### (6) Implementation of high speed pipeline control

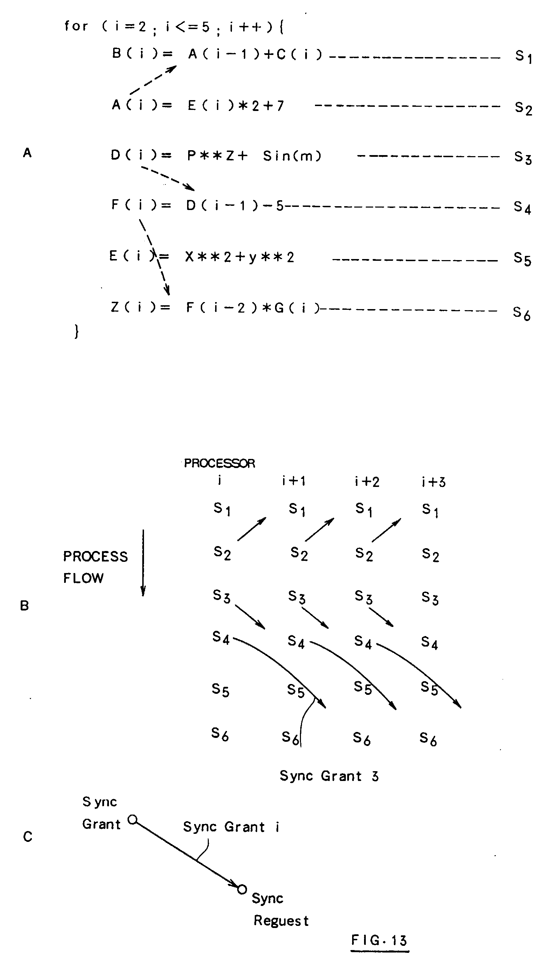

Causing all processors P in one group to be simultaneously synchronised by waiting every time a synchronisation point is reached, is effective not only when the processing is to be executed in parallel, but also when processing needs to be pipelined. The application to a pipeline system may be accomplished by sliding, as required, the execution of the processing assigned to each processor over a sliding interval. In order to correctly hold this sliding interval, it is necessary for all processors to be simultaneously synchronised, as shown in Fig. 12.

In a case where parallel processing by the pipeline system are concerned, the number of synchronisation instruction inserted increases when the sliding interval of the pipelines is small and the number of processors is large. However, the number of synchronisation instruction inserted may be kept small by providing a system in which processors in a group are synchronised in a predetermined sequence.

For example, when a loop statement as shown in Fig. 13A is executed, each processor performs the processing as shown in Fig. 13B. In the parenthesis in Fig. 13A, i=2 represents the initial value, i<=5 a check condition, and i++ an increment. The arrows in Fig. 13B signify that, as shown in Fig. 13C, first a synchronisation is established between a processor which has issued the synchronisation grant, and a corresponding processor which has issued the synchronisation request, and that the notification of Sync Grant i is issued.

As is clear from Fig. 13B, by permitting two or more synchronisation sequences to be simultaneously specified, parallel processing by way of a complex pipeline system can be supported. In the example of Fig. 13B, synchronisation is attained in the sequence of processor i, processor i+2 and processor i+4, while attaining synchronisation in the sequence of processor i, processor i+1, and processor i+2.

In this way, all processors are not stopped every time, resulting in reduced overhead.

When synchronisation is attained in the sequence as specified above, the synchronisation request/grant sequence in each processor needs to be maintained. Then, as in the following example, the fact that the frequency of synchronisation grant matches the frequency of synchronisation request is used. For example, it is understood, as shown in the figure, that synchronisation grant 3 from the processor i to the processor i+2 is the third synchronisation grant in the processor i, and is also the third synchronisation request in the processor i+2. Accordingly, the processor that receives the synchronisation request is able to appropriately issue synchronisation grant by counting the frequency of synchronisation request from the synchronisation requesting processor. By realising the above-described mechanism with hardware, the overhead for synchronisation can be reduced.

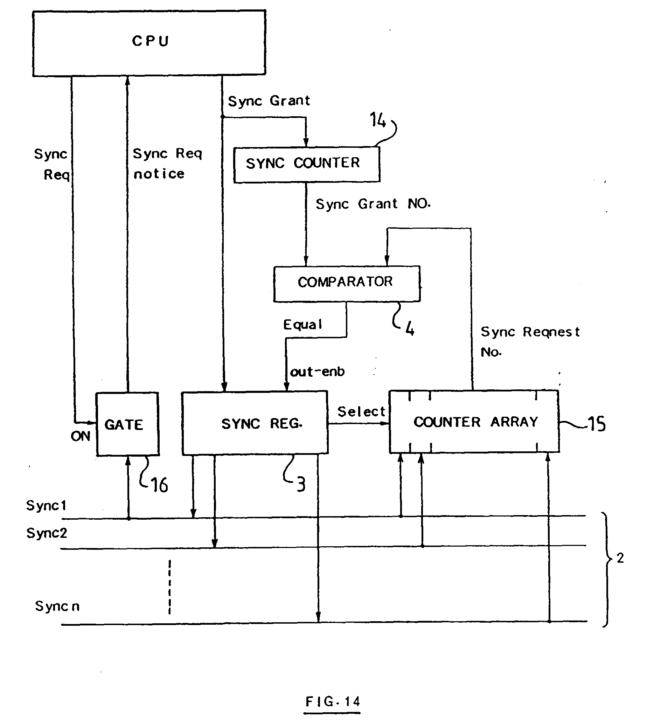

To realise the system, a synchronisation controller such as is shown in Fig. 14 can be used. However, no change in the connection and the relative configuration of the processor P, the synchronisation controller S and the synchronisation signal bus is made.

Referring to Fig. 14, the synchronisation controller S consists of a synchronisation register 3, a synchronisation counter 14, a comparator 4, a counter array 15 and a gate 16. On each occasion, the processor or CPU sets into the synchronisation register 3 the identifier for the processor P from which the synchronisation should be received, to issue a synchronisation grant. The synchronisation counter 14 retains the frequency of the synchronisation grant. Each counter which constitutes the counter array 15 is assigned to each processor P to detect the signals which are fed on the synchronisation signal bus 2, thereby retaining the frequency of synchronisation request from each processor P. The comparator 4 compares the frequency counted by the synchronisation counter 14 with that of synchronisation request from each synchronisation requesting processor P, and feeds a synchronisation grant signal when their values are found in agreement. The gate 16, upon receiving the synchronisation grant signals from other processors P, feeds an Ack signal to these processors, thereby notifying them of establishment of synchronisation.

### (7) Examples of usage

Three examples of a very large instruction word (VLIW) type compiler, loop expansion, and parallel sort are explained in the following to illustrate effective use of the arrangement.

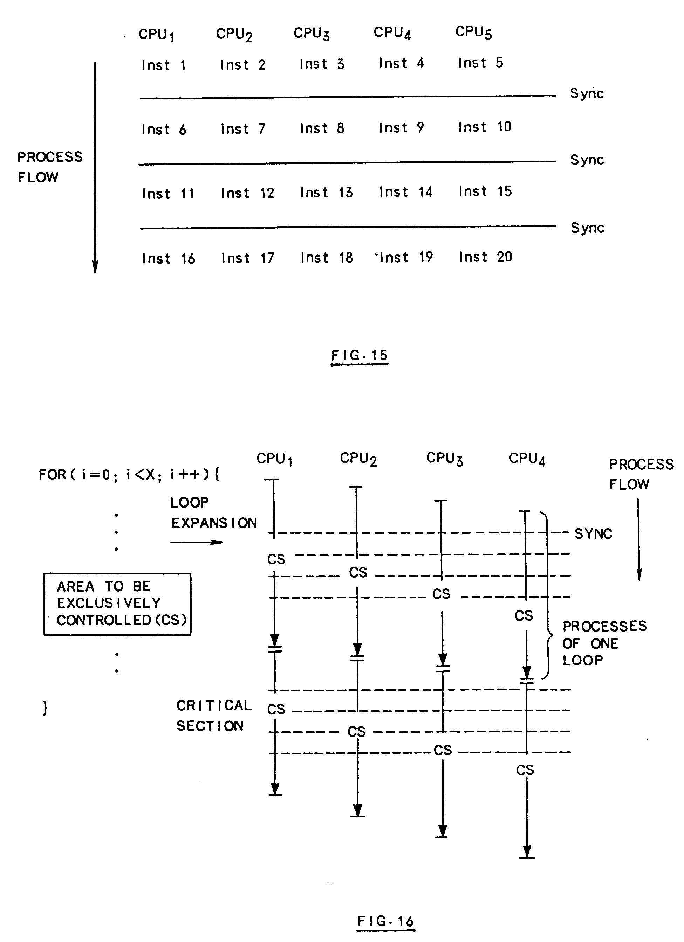

A VLIW type compiler divides an ordinary sequential program into segments with a length of about one instruction, and assigns them to a number of processors, thereby extracting the parallelism possessed by the program (Fig. 15). At this stage, in order to maintain the sequential relationship of the instructions, it is necessary to synchronise the processors every time an instruction is executed. In addition, it is important to keep small the proportion accounted for by the overhead required for synchronising the processors in the total processing of the program. The disclosed arrangement is considered effective in meeting these demands.

Loop expansion is a method of parallel processing by assigning repetition of DO loop statements or the like, to a plurality of processors as shown in Fig. 16. In the loop expansion, shared data is frequently referenced during each repetition. In order to accurately perform read/write of the shared/data, the write to the shared data by each repetition needs to be exclusively controlled. High speed exclusive control can be performed by sliding the repetition of the loop slightly when it is performed, and by synchronising the processors every time when write is performed to the common data.

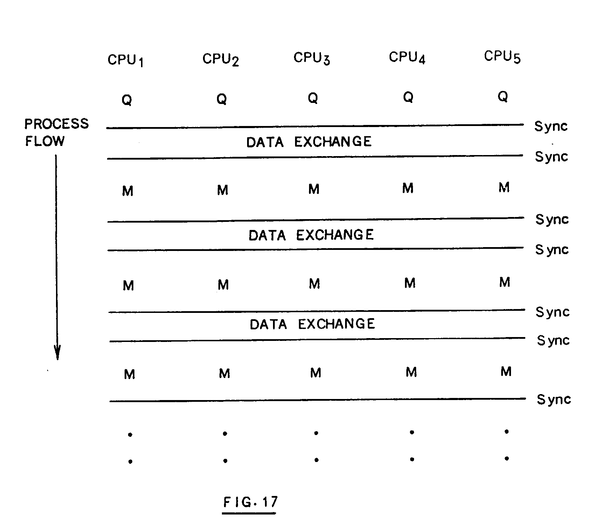

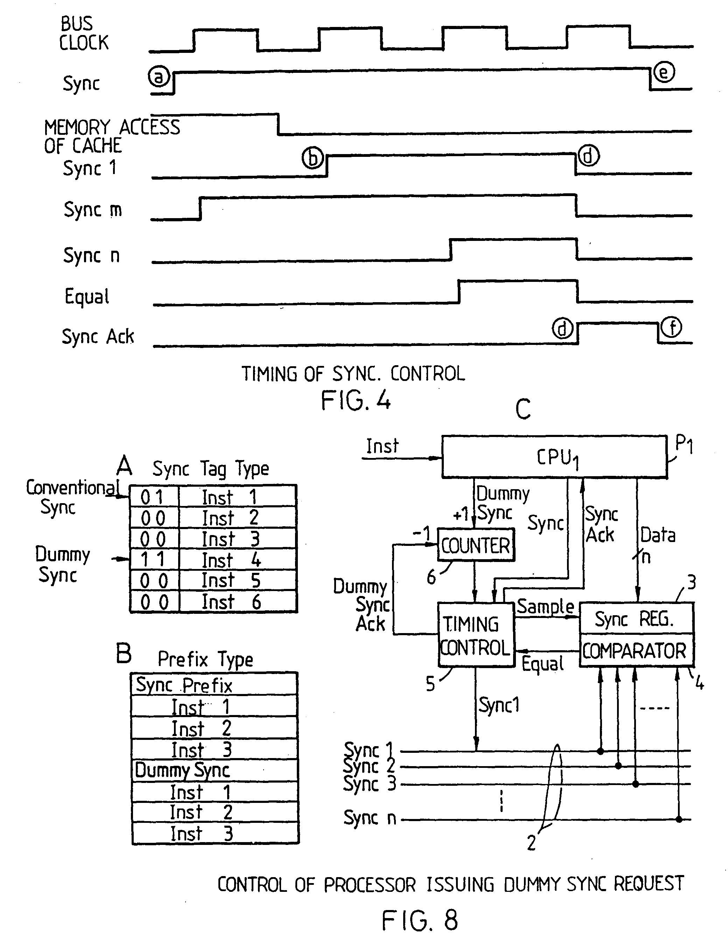

A parallel sort that is a combination of a quick sort Q and a merge sort M is an algorithm for carrying out the sorts at a high speed using a plurality of processors (Fig. 17). The quick sort Q is performed in the first cycle, with the data to be sorted assigned to a plurality of processors. In the next cycle, parts of data are exchanged with neighbouring processors and, then, the merge sort M is conducted. In the subsequent cycles, the exchange of parts of data and the merge sort M are repeated until entire data are completely sorted. In the parallel sort, the processors are required to be synchronised at a high speed before and after exchanging parts of data with neighbouring processors, with the quick sort Q or the merge sort M ended at each cycle. The disclosed arrangement is considered to efficiently execute changeover between the sorts and the data exchange.

The data delivered between processors resides at the time of synchronisation in the cache for each processor under a cache update protocol, so that high speed data delivery may be expected between processors.

As described in the above, one or other of the disclosed arrangements, it becomes possible to provide individual and/or group synchronisation between the processors and processes that can be arbitrarily varied by setting the bit data of the synchronisation register in the synchronisation controller provided for each processor, and that a multi-processor system is effectively used by a plurality of applications. In addition, various synchronisations including the pipeline processing can be attained by setting of the bit data. Moreover, since the state of each processor participating in the synchronisation is effectively continuously reflected on the synchronisation signal bus, it can be snooped and it is no longer necessary to operate on a demand and response basis rendering the bus a serially reusable resource. Therefore, it has become possible to avoid the overhead resulting from contention for the synchronisation signal bus, and to improve the throughput of the synchronisation control. Of course, the loads on the common buses and the common memories can be relieved.

## Claims

1. A multiprocessor system including a plurality of processors connected through a shared data bus and arranged to perform operations in synchronism; a synchronisation controller (S) for each of the processors; and
a synchronisation signal bus (2) to which the synchronisation controllers are commonly connected;
each synchronisation controller having output means (5) for outputting synchronisation status signals (Sync 1) to the synchronisation signal bus in response to a synchronisation request signal (Sync);
monitoring means (4) for monitoring the synchronisation signal bus to detect a predefined synchronisation condition thereof; and
signalling means (4,5) responsive to such detection to signal (Sync Ack) the occurrence of said synchronisation condition to the associated processor;
characterised in that :-
each of the processors is arranged to generate a synchronisation request signal in response to its instruction stream;
the system further includes a synchronisation register means (3) for flexibly indicating a group of processors to participate in synchronisation;
and in that said output means is arranged to output the synchronisation status of its associated processor in an individual portion of the synchronisation signal bus, and said monitoring means includes means (4) for comparing the synchronisation status signals (Sync 1-Sync n) on the synchronisation signal bus (2) with the contents of the synchronisation register means (3) thereby to detect said synchronisation condition

2. A system as claimed in claim 1, wherein the synchronisation signal bus consists of synchronisation signal lines in number corresponding to the number of processors, each controller outputting its synchronisation status signals to respective synchronisation signal lines, the synchronisation register means storing data bits corresponding to each processor, the means for comparing being arranged to compare data bits with the synchronisation status signals on the respective synchronisation signal lines.

3. A system as claimed in claims 1 or 2, wherein an instruction for synchronisation request signal is inserted into the instruction stream to be executed by the processors, the synchronisation request signal being generated in response to the execution of the instruction for a synchronisation request signal.

4. A system as claimed in claims 1 or 2, wherein a tag section that indicates whether or not the synchronisation request signal is generated is contained in the format of the instruction to be executed by the processor, the processor generating the request signal in response to the indication by the tag.

5. A system as claimed in any preceding claim, wherein each of the controllers includes counter means (6) for counting dummy synchronisation request signals, and counting dummy synchronisation condition signals in the reverse direction to that of the dummy synchronisation request signals, each of the processors being controlled under synchronisation control mode or under non-synchronisation control mode according to the content of the corresponding one of the counter means.

6. A multiprocessor system arranged in clusters, wherein each cluster is a system as claimed in any preceding claim, the data bus being common to the clusters, each cluster including, in addition to its intracluster synchronisation signal bus a cluster-to-cluster synchronisation notifying signal line (2a) commonly connected to the synchronisation controllers of each cluster, the system further comprising:
a cluster synchronisation controller (7) provided for each cluster of said processors; and
a cluster-to-cluster synchronisation signal bus (8) to which said cluster synchronisation controllers are commonly connected;
each of said cluster synchronisation controllers having :
an intracluster synchronisation register (10) for specifying the processors in a corresponding cluster to be synchronized;
first comparator means (12) for comparing signals from the intracluster synchronisation signal bus in said corresponding cluster with the content of said intracluster synchronisation register;
means for transmitting a cluster-to-cluster wait signal to said cluster-to-cluster synchronisation signal bus (8) based on the result of the comparison by said first comparator means;
a cluster synchronisation register (9) for specifying the clusters to be synchronised;
second comparator means (11) for comparing the signals from said cluster-to-cluster synchronisation signal bus with the content of said cluster synchronisation register (9), and means for transmitting a cluster-to-cluster synchronisation notifying signal to the cluster-to-cluster synchronisation notifying signal lines (2a) of said corresponding clusters based on the result of the comparison by said second comparison means.

7. A system as claimed in any of claims 1 to 5, wherein each of the synchronisation controllers includes:
switch means (13) for changing over the connection state between a corresponding synchronisation controller and each of the synchronisation signal lines, the synchronisation register means specifying the connection state, and
means for receiving the signal from the corresponding synchronisation signal line by controlling the switch means in accordance with the content of the register, upon receiving the synchronisation request signal from the corresponding processor.

8. A system as claimed in claim 7, wherein the number of the synchronisation signal lines is arranged to be at least one-half the number of the processors.

9. A system as claimed in any of claims 1 to 5, wherein the processes to be synchronised are pipelined.

10. A system as claimed in claim 9, wherein each of the processors involved generates synchronisation grant signals to the other processors in response to its instruction stream, each of the processors transmitting a synchronisation request signal to other processors in response to each instruction stream, synchronisation required among pipeline type processes each assigned to the processors being achieved by the synchronisation grant signals and synchronisation request signals, and wherein the synchronisation register specification of the processors in a synchronisation relationship with each other is based on the synchronisation grant signal, the synchronisation controller provided for each of the processors including
synchronisation grant signal counting means (14) for counting the number of times when the synchronisation grant signal is transmitted,
a counter array (15) for individually counting the number of synchronisation request signals on the synchronisation signal lines of the signal bus for each synchronisation signal line,
means for taking out the content of count for corresponding synchronisation signal line from the counter array means in accordance with the content of the synchronisation register (3),
comparator means (4) for comparing the counted content taken out, with the content of count from the synchronisation grant signal counting means,
means to transmit to the synchronisation signal bus the content of the synchronisation register (3) as the synchronisation grant signal in accordance with the results of the comparison by the comparator means, and
means for feeding the synchronisation grant signals on the corresponding synchronisation signal line to the corresponding processors.

## Patentansprüche

1. Ein Multiprozessorsystem, das eine Vielzahl von Prozessoren enthält, die über einen gemeinsam benutzten Datenbus miteinander verbunden und angeordnet sind, um Operationen synchron durchzuführen; eine Synchronisierungssteuereinheit (S) für jeden der Prozessoren; und
einen Synchronisierungssignalbus (2), mit dem die Synchronisierungssteuereinheiten gemeinsam verbunden sind;
wobei jede Synchronisierungssteuereinheit Ausgangsmittel (5) hat, um die Synchronisierungsstatussignale (Sync 1) an den Synchronisierungssignalbus als Reaktion auf ein Synchronisierungsanforderungssignal (Sync) auszugeben;
Überwachungsmittel (4), um den Synchronisierungssignalbus zu überwachen, eine zuvor definierte Synchronisierungsbedingung zu erkennen; und
Signalisierungsmittel (4, 5), die auf die Erkennung reagieren (Sync Ack), um das Auftreten der Synchronisierungsbedingung dem zugehörigen Prozessor zu signalisieren;
dadurch gekennzeichnet, daß
jeder der Prozessoren angeordnet ist, um ein Synchronisierungsanforderungssignal als Reaktion auf seinen Befehlsstrom zu generieren;
das System außerdem Synchronisierungsregistermittel (3) enthält, um flexibel eine Gruppe mit Prozessoren anzuzeigen, an der Synchronisierung teilzunehmen;
und in dem die Ausgangsmittel angeordnet sind, um den Synchronisierungsstatus ihres zugehörigen Prozessors in einem einzelnen Teil des Synchronisierungssignalbusses auszugeben, und die Überwachungsmittel Mittel (4) enthalten, um die Synchronisierungsstatussignale (Sync 1-Sync n) im Synchronisierungssignalbus (2) mit den Inhalten der Synchronisierungsregistermittel (3) zu vergleichen, um so die Synchronisierungsbedingung zu erkennen.

2. Ein System wie in Anspruch 1 angemeldet, wobei der Synchronisierungssignalbus Synchronisierungssignalleitungen enthält, deren Anzahl sich mit derjenigen der Prozessoren deckt, wobei jede Steuereinheit ihre Synchronisierungsstatussignale an die jeweiligen Synchronisierungssignalleitungen ausgibt und die Synchronisierungsregistermittel Datenbits entsprechend dem jeweiligen Prozessor speichern, wobei die Vergleichsmittel angeordnet sind, um Datenbits mit den Synchronisierungsstatussignalen in den jeweiligen Synchronisierungssignalleitungen zu vergleichen.

3. Ein System wie in den Ansprüchen 1 oder 2 angemeldet, wobei ein Befehl für das Synchronisierungsanforderungssignal in den Befehlsstrom eingefügt wird, um durch die Prozessoren ausgeführt zu werden, wobei das Synchronisierungsanforderungssignal als Reaktion auf die Ausführung des Befehls für ein Synchronisierungsanforderungssignal generiert wird.

4. Ein System wie in den Ansprüchen 1 oder 2 angemeldet, wobei ein Markierungsabschnitt, der angibt, ob das Synchronisierungsanforderungssignal generiert oder nicht generiert wird, im Befehlsformat enthalten ist, das von dem Prozessor ausgeführt wird, wobei der Prozessor das Anforderungssignal als Reaktion auf die Angabe durch die Markierung generiert.

5. Ein System wie in einem vorhergehenden Anspruch angemeldet, wobei jede der Steuereinheiten Zählermittel (6) enthält, um Blind-Synchronisierungsanforderungssignale zu zählen und Blind-Synchronisierungsbedingungssignale in umgekehrter Richtung zu den Blind-Synchronisierungssignalen zu zählen, wobei die Prozessoren im Synchronisierungssteuermodus oder im Nichtsynchronisierungssteuermodus gemäß dem Inhalt der jeweiligen Zählermittel gesteuert werden.

6. Ein Multiprozessorsystem, das in Cluster angeordnet ist, wobei jeder Cluster ein System ist, wie in einem vorhergehenden Anspruch angemeldet, wobei der Datenbus von den Cluster gemeinsam benutzt wird und jeder Cluster, außer seinem Intracluster-Synchronisierungssignalbus, eine Cluster-zu-Cluster-Synchronisierung hat, welche die Signalleitung (2a), die mit den Synchronisierungssteuereinheiten von jedem Cluster verbunden ist, benachrichtigt, wobei das System außerdem enthält:
eine Cluster-Synchronisierungssteuereinheit (7), die für jeden Cluster der Prozessoren bereitgestellt wird; und
einen Cluster-zu-Cluster-Synchronisierungssignalbus (8), mit dem die Cluster-Synchronisierungssteuereinheiten gemeinsam verbunden sind;
jede der Cluster-Synchronisierungssteuereinheiten
ein Intracluster-Synchronisierungsregister (10) enthält, um die Prozessoren in einem entsprechenden Cluster anzugeben, die zu synchronisieren sind;
erste Komparatormittel (12), um die Signale von dem Intracluster-Synchronisierungssignalbus in dem entsprechenden Cluster mit dem Inhalt des Intracluster-Synchronisierungsregister zu vergleichen;
Mittel, um ein Cluster-zu-Cluster-Wartesignal an den Cluster-zu-Cluster-Synchronisierungssignalbus (8) zu übertragen, das auf dem Ergebnis des Vergleichs basiert, der von den ersten Komparatormitteln durchgeführt wurde;
ein Cluster-Synchronisierungsregister (9), um die zu synchronisierenden Cluster anzugeben;
zweite Komparatormittel (11), um die Signale aus dem Cluster-zu-Cluster-Synchronisierungssignalbus mit dem Inhalt des Cluster-Synchronisierungsregisters (9) zu vergleichen und Mittel, um ein Cluster-zu-Cluster-Synchronisierungsbenachrichtigungssignal an die Cluster-zu-Cluster-Synchronisierungsbenachrichtigungs-Signalleitungen (2a) der entsprechenden Cluster zu übertragen, das auf dem Ergebnis des Vergleichs basiert, der von den zweiten Vergleichsmitteln durchgeführt wurde.

7. Ein System wie in irgendeinem der Ansprüche 1 bis 5 angemeldet wurde, wobei jedes der Synchronisierungssteuermittel enthält:
Schaltmittel (13), um den Verbindungsstatus zwischen einer entsprechenden Synchronisierungssteuereinheit und jeder der Synchronisierungssignalleitungen umzustellen, wobei die Synchronisierungsregistermittel den Verbindungsstatus angeben, und
Mittel, um das Signal von der entsprechenden Synchronisierungssignalleitung zu empfangen, indem die Schaltmittel gemäß dem Registerinhalt gesteuert werden, nachdem das Synchronisierungsanforderungssignal von dem entsprechenden Prozessor empfangen wurde.

8. Ein System wie in Anspruch 7 angemeldet, wobei die Anzahl der angeordneten Synchronisierungssignalleitungen wenigstens eine Hälfte von der Anzahl der Prozessoren ist.

9. Ein System wie in einem der Ansprüche 1 bis 5 angemeldet, wobei die Prozessoren, die zu synchronisieren sind, verknüpft sind.

10. Ein System wie in Anspruch 9 angemeldet, wobei jeder der darin enthaltenen Prozessoren Synchronisierungsbewilligungssignale an die anderen Prozessoren als Reaktion auf seinen Befehlsstrom generiert, wobei jeder der Prozessoren ein Synchronisierungsanforderungssignal an die anderen Prozessoren als Reaktion auf jeden Befehlsstrom überträgt, der die Synchronisierung unter den verknüpften Prozessen verlangt, von denen jeder den Prozessoren zugeordnet ist, die durch die Synchronisierungsbewilligungssignale und Synchronisierungsanforderungssignale ausgeführt werden und die Synchronisierungsregisterspezifikation der Prozessoren in einem Synchronisierungsverhältnis untereinander auf dem Synchronisierungsbewilligungssignal basiert, wobei die Synchronisierungssteuereinheit, die für jeden der Prozessoren bereitgestellt wird,
Zählmittel (14) für das Synchronisierungsbewilligungssignal enthält, um zu zählen, wie oft das Synchronisierungsbewilligungssignal übertragen wird,
einen Zählerbereich (15) um die Synchronisierungsanforderungssignale in den Synchronisierungssignalleitungen des Signalbusses für jede Synchronisierungssignalleitung einzeln zu zählen,
Mittel, um den Inhalt der Zählung für die entsprechende Synchronisierungssignalleitung aus den Zählerbereichsmitteln in Übereinstimmung mit dem Synchronisierungsregister (3) herauszuziehen,
Komparatormittel (4), um den gezählten, herausgezogenen Inhalt mit dem Inhalt der Zählung aus den Zählmitteln des Synchronisierungsbewilligungssignal zu vergleichen,
Mittel, um den Inhalt des Synchronisierungsregisters (3) als Synchronisierungsbewilligungssignal in Übereinstimmung mit den Ergebnissen des Vergleichs durch die Komparatormittel an den Synchronisierungssignalbus zu übertragen, und
Mittel, um die Synchronisierungsbewilligungssignale in die entsprechende Synchronisierungssignalleitung in den entsprechenden Prozessoren einzuspeisen.

## Revendications

1. Système à multiprocesseur comprenant une pluralité de processeurs reliés par l'intermédiaire d'un bus de données partagé, et agencés pour réaliser des opérations en synchronisme, un contrôleur de synchronisation (S) pour chacun des processeurs, et
un bus de signaux de synchronisation (2) auquel les contrôleurs de synchronisation sont reliés en commun,
chaque contrôleur de synchronisation comportant un moyen de sortie (5) destiné à sortir des signaux d'état de synchronisation (Sync 1) vers le bus de signaux de synchronisation en réponse à un signal de demande de synchronisation (Sync),
un moyen de surveillance (4) destiné à surveiller le bus de signaux de synchronisation afin de détecter une condition de synchronisation prédéfinie sur celui-ci, et
un moyen de signalisation (4, 5) répondant à une telle détection afin de signaler (Sync Ack) l'apparition de ladite condition de synchronisation, au processeur associé,
caractérisé en ce que :
chacun des processeurs est agencé pour générer un signal de demande de synchronisation en réponse à son flux d'instructions,
le système comprend en outre un moyen de registre de synchronisation (3) destiné à indiquer de façon souple à un groupe de processeurs de s'associer en synchronisation,
et en ce que ledit moyen de sortie est agencé pour sortir l'état de synchronisation de son processeur associé dans une partie individuelle du bus de signaux de synchronisation, et ledit moyen de surveillance comprend un moyen (4) destiné à comparer les signaux d'état de synchronisation (Sync 1 à Sync n) sur le bus de signaux de synchronisation (2), au contenu du moyen de registre de synchronisation (3) afin de détecter ainsi ladite condition de synchronisation.

2. Système selon la revendication 1, dans lequel le bus de signaux de synchronisation est constitué de lignes de signaux de synchronisation en nombre correspondant au nombre des processeurs, chaque contrôleur sortant ses signaux d'état de synchronisation vers des lignes de signaux de synchronisation respectives, le moyen de registre de synchronisation mémorisant des bits de données correspondant à chaque processeur, le moyen destiné à comparer étant agencé pour comparer les bits de données aux signaux d'état de synchronisation sur les lignes de signaux de synchronisation respectives.

3. Système selon la revendication 1 ou la revendication 2, dans lequel une instruction destinée pour le signal de demande de synchronisation est insérée dans le flux d'instructions destiné à être exécuté par les processeurs, le signal de demande de synchronisation étant généré en réponse à l'exécution de l'instruction pour un signal de demande de synchronisation.

4. Système selon la revendication 1 ou la revendication 2, dans lequel une section d'étiquette qui indique si le signal de demande de synchronisation est généré ou non, est contenue dans le format de l'instruction devant être exécutée par le processeur, le processeur générant le signal de demande en réponse à l'indication provenant de l'étiquette.

5. Système selon l'une quelconque des revendications précédentes, dans lequel chacun des contrôleurs comprend un moyen de compteur (6) destiné à compter des signaux de demande de synchronisation factices, et à compter des signaux de condition de synchronisation factices dans le sens inverse à celui des signaux de demande de synchronisation factices, chacun des processeurs étant commandé sous un mode de commande en synchronisation ou sous un mode de commande sans synchronisation, conformément au contenu du compteur correspondant parmi les moyens de compteur.

6. Système à multiprocesseur agencé en grappes, dans lequel chaque grappe constitue un système selon l'une quelconque des revendications précédentes, le bus de données étant commun aux grappes, chaque grappe comprenant, en plus de son bus de signaux de synchronisation intra-grappe, une ligne de signaux notifiant la synchronisation de grappe à grappe (2a) reliée en commun aux contrôleurs de synchronisation de chaque grappe, le système comprenant en outre :
un contrôleur de synchronisation de grappe (7) prévu pour chaque grappe desdits processeurs, et
un bus de signaux de synchronisation de grappe à grappe (8) auquel lesdits contrôleurs de synchronisation de grappe sont reliés en commun,
chacun desdits contrôleurs de synchronisation de grappe comportant :
un registre de synchronisation intra-grappe (10) destiné à spécifier les processeurs d'une grappe correspondante devant être synchronisés,
un premier moyen de comparateur (12) destiné à comparer les signaux provenant du bus de signaux de synchronisation intra-grappe dans ladite grappe correspondante, au contenu dudit registre de synchronisation intra-grappe,
un moyen destiné à transmettre un signal d'attente de grappe à grappe audit bus de signaux de synchronisation de grappe à grappe (8) sur la base du résultat de la comparaison par ledit premier moyen de comparateur,
un registre de synchronisation de grappe (9) destiné à spécifier les grappes devant être synchronisées,
un second moyen de comparateur (11) destiné à comparer les signaux provenant dudit bus de signaux de synchronisation de grappe à grappe au contenu dudit registre de synchronisation de grappe (9), et un moyen destiné à transmettre un signal de notification de synchronisation de grappe à grappe vers les lignes de signaux de notification de synchronisation de grappe à grappe (2a) desdites grappes correspondantes sur la base du résultat de la comparaison par ledit second moyen de comparaison.

7. Système selon l'une quelconque des revendications 1 à 5, dans lequel chacun des contrôleurs de synchronisation comprend :
un moyen de commutateur (13) destiné à changer l'état de connexion entre un contrôleur de synchronisation correspondant et chacune des lignes de signaux de synchronisation, le moyen de registre de synchronisation spécifiant l'état de la connexion, et
un moyen destiné à recevoir le signal provenant de la ligne de signaux de synchronisation correspondant en commandant le moyen de commutateur conformément au contenu du registre, lors de la réception du signal de demande de synchronisation à partir du processeur correspondant.

8. Système selon la revendication 7, dans lequel le nombre des lignes de signaux de synchronisation est agencé de façon à être d'au moins une moitié du nombre des processeurs.

9. Système selon l'une quelconque des revendications 1 à 5, dans lequel les traitements devant être synchronisés, sont mis en pipeline.

10. Système selon la revendication 9, dans lequel chacun des processeurs impliqués génère des signaux d'accord de synchronisation vers les autres processeurs en réponse à son flux d'instructions, chacun des processeurs transmettant un signal de demande de synchronisation aux autres processeurs en réponse à chaque flux d'instructions, la synchronisation nécessaire entre les processus de type pipeline qui sont chacun affectés aux processeurs, étant obtenue par les signaux d'accord de synchronisation et les signaux de demande de synchronisation, et dans lequel la spécification du registre de synchronisation des processeurs en une relation de synchronisation les uns avec les autres, est basée sur le signal d'accord de synchronisation, le contrôleur de synchronisation prévu pour chacun des processeurs comprenant
un moyen de comptage de signaux d'accord de synchronisation (14) destiné à compter le nombre de fois où le signal d'accord de synchronisation est transmis,
un réseau de compteurs (15) destiné à compter individuellement le nombre des signaux de demande de synchronisation sur les lignes de signaux de synchronisation du bus de signaux pour chaque ligne de signal de synchronisation,
un moyen destiné à prélever le contenu du comptage pour une ligne de signal de synchronisation correspondante, à partir du moyen de réseau de compteur, conformément au contenu du registre de synchronisation (3),
un moyen de comparateur (4) destiné à comparer le contenu décompté que l'on a prélevé, au contenu du comptage provenant du moyen de comptage des signaux d'accord de synchronisation,
un moyen destiné à transmettre vers le bus de signaux de synchronisation le contenu du registre de synchronisation (3) en tant que signal d'accord de synchronisation conformément aux résultats de la comparaison par le moyen de comparateur, et
un moyen destiné à appliquer les signaux d'accord de synchronisation sur la ligne de signal de synchronisation correspondante, aux processeurs correspondants.
